# EUROPÄISCHE PATENTSCHRIFT

(11) **EP 3 067 496 B1**
(45) Veröffentlichungstag und Bekanntmachung des Hinweises auf die Patenterteilung: **26.08.2020**
(21) Anmeldenummer: 16157072.6
(22) Anmeldetag: 24.02.2016
(51) Int. Cl.: E05D 5/02

(54) **ANORDNUNG MIT EINER BEFESTIGUNGSEINRICHTUNG**
ASSEMBLY WITH A FIXING DEVICE
SYSTEME DOTE D'UN DISPOSITIF DE FIXATION

(30) Priorität: 09.03.2015 DE 102015204144
(43) Veröffentlichungstag der Anmeldung: 14.09.2016
(73) Patentinhaber: Siemens Mobility GmbH, 81739 München (DE)
(72) Erfinder: Reske, Marko, 40476 Düsseldorf (DE)

(56) Entgegenhaltungen:
- EP-A1- 0 694 701
- EP-A2- 1 916 372
- WO-A1-03/076747
- CH-A5- 682 252
- DE-U1-202009 007 517
- DE-U1-202012 010 973
- FR-A1- 2 667 490
- JP-A- 2007 263 184
- US-A1- 2003 154 838
- US-A1- 2006 182 492

## Beschreibung

Die Erfindung bezieht sich auf Anordnungen mit einem Fußboden, einer Einrichtungskomponente und einer Befestigungseinrichtung, den Fußboden und die Einrichtungskomponente verbindet nach dem Oberbegriff von Anspruch 1.

So ist aus der DE 20 2009 007 517 U1 eine solche Anordnung bekannt, und zwar zur Anbringung rechteckiger Solarmodule auf einem Flachdach. Weitere Ausführungsformen für solche Befestigungsanordnungen ergeben sich aus der US 2006/182492 A1, die sich mit dem Aufbau diverser Behälter beschäftigt, und aus der WO 03/076747 A1, die eine Trag- und Führungseinrichtung zum Halten von ortsveränderlichen, hängend gelagerten Tür- oder Wandelementen zum Gegenstand hat.

Bei Fahrzeugen werden Komponenten wie Gepäckregale, Glastrennwände, Raumteiler oder Türflügel heutzutage mit zusätzlichen Befestigungsflächen bzw. Anschraubflächen mit dem Fahrzeugboden verbunden. Diese zusätzlichen Bauteile benötigen zusätzlichen Bauraum und müssen teilweise in den Fußboden eingelassen und versiegelt werden, um das Erscheinungsbild des Fahrzeugs nicht negativ zu beeinflussen. Des Weiteren erzeugen die zusätzlichen Flächen und Verfestigungselemente neben dem Montageaufwand auch ein erhöhtes Gewicht.

Der Erfindung liegt die Aufgabe zugrunde, für Anordnungen der eingangs angegebenen Art eine besonders einfach zu montierende, aber dennoch mechanisch sehr belastbare, Befestigungseinrichtung anzugeben.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Ein wesentlicher Vorteil der erfindungsgemäßen Anordnung ist darin zu sehen, dass es Strangpressprofilteile ermöglichen, durch entsprechende Formgebung den Einsatz standardisierter Winkelteile vorzusehen. Darüber hinaus ermöglichen es Strangpressprofilteile in vorteilhafter Weise, eine Befestigung zwischen dem Fußboden und der Einrichtungskomponente stets auch in der jeweiligen Hauptbelastungsrichtung zu gewährleisten.

Bezüglich der Ausgestaltung des Strangpressprofilteils ist es mit Blick auf hohe mechanische Stabilität vorgesehen, dass die Außenplatte und die zweite Platte durch zwei parallele Seitenwände verbunden sind, die gemeinsam mit der Außenplatte und der zweiten Platte einen im Querschnitt geschlossenen Strangpressprofilabschnitt bilden, der sich entlang der Strangpressprofilrichtung rohrförmig erstreckt, das Winkelteil in dem geschlossenen Strangpressprofilabschnitt angeordnet ist und zumindest eine der Seitenwände im Bereich des Winkelteils eine seitliche Ausnehmung aufweist, die einen seitlichen Zugang zum Winkelteil ermöglicht.

Darüber hinaus ist vorgesehen, dass das Winkelteil in einem stirnseitigen Endabschnitt des geschlossenen Strangpressprofilabschnitts angeordnet ist und der zweite Abschnitt des Winkelteils eine stirnseitige Anschlussschnittstelle zu dem zweiten Teil bildet.

Das Strangpressprofilteil besteht vorzugsweise aus Aluminium.

Der erste und zweite Abschnitt des Winkelteils stehen vorzugsweise senkrecht aufeinander.

Mit Blick auf eine feste Anbindung des Strangpressprofilteils am Fußboden wird es als vorteilhaft angesehen, wenn das Strangpressprofilteil in der Außenplatte eine Vielzahl an in Strangpressrichtung beabstandeten Befestigungslöchern aufweist, die ein Befestigen, insbesondere Anschrauben, des Strangpressprofilteils, auf dem Fußboden ermöglichen.

Vorzugsweise weist zumindest eine der Seitenwände für jedes der in Strangpressrichtung beabstandeten Befestigungslöcher eine seitliche Ausnehmung auf, die einen seitlichen Zugang zum zugeordneten Befestigungsloch ermöglicht. Es können sich dabei mehrere Befestigungslöcher eine gemeinsame seitliche Ausnehmung teilen.

Bezüglich der Anbindung des zweiten Teils wird es als vorteilhaft angesehen, wenn das Strangpressprofilteil einen im Querschnitt u-förmigen Abschnitt aufweist, in den ein Auflageabschnitt des zweiten Teils eingeschoben ist.

Vorzugsweise weist das zweite Teil einen Rahmenabschnitt auf, der sich an der Stirnseite des Strangpressprofilteils und an dem Winkelteil vorbei in Richtung des Fußbodens erstreckt.

Auch ist es mit Blick auf hohe mechanische Stabilität vorteilhaft, wenn der u-förmige Abschnitt des Strangpressprofilteils durch die beiden Seitenwände des Strangpressprofilteils und eine dritte Platte gebildet ist, die parallel zur zweiten Platte des Strangpressprofilteils angeordnet ist und gemeinsam mit dieser und den beiden Seitenwänden einen im Querschnitt geschlossenen Strangpressprofilabschnitt bilden, der sich entlang der Strangpressprofilrichtung rohrförmig erstreckt.

Bei dem ersten Teil handelt es sich vorzugsweise um einen Fahrzeugfußboden. Die Einrichtungskomponente kann z.B. eine Gepäckregalkomponente, eine Trennwand, ein Raumteiler oder ein Türflügel sein.

Die Erfindung wird nachfolgend anhand von Ausführungsbeispielen näher erläutert; dabei zeigen beispielhaft:
- Figur 1: ein Ausführungsbeispiel für ein Fahrzeug, auf dessen Fahrzeugfußboden eine Einrichtungskomponente montiert ist, wobei die Figur 1 die Teile in einer Explosionsdarstellung zeigt,
- Figur 2: ein Ausführungsbeispiel für ein Strangpressprofilteil, das bei dem Fahrzeug gemäß Figur 1 zur Befestigung der Einrichtungskomponente eingesetzt werden kann, näher im Detail und
- Figur 3: ein Ausführungsbeispiel für ein Winkelelement, das zur Befestigung der Einrichtungskomponente bei dem Fahrzeug gemäß Figur 1 eingesetzt werden kann, näher im Detail.

In den Figuren werden der Übersicht halber für identische oder vergleichbare Komponenten stets dieselben Bezugszeichen verwendet.

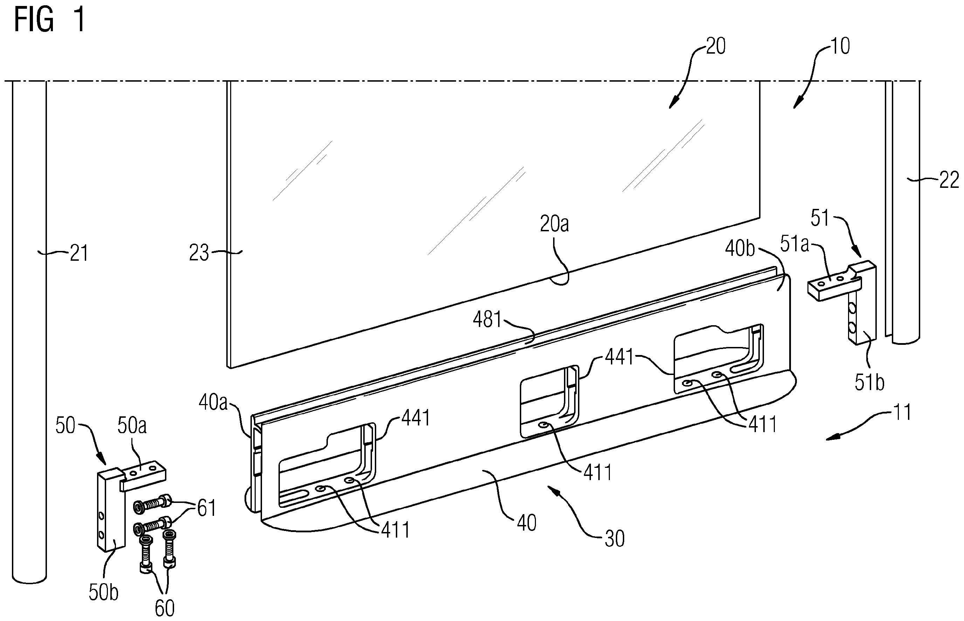

Die Figur 1 zeigt ein Fahrzeug 10, bei dem es sich beispielsweise um ein Schienenfahrzeug handeln kann. Auf dem Fahrzeugboden 11 des Fahrzeugs 10 ist eine Einrichtungskomponente 20 mittels einer Befestigungseinrichtung 30 montiert.

Die Einrichtungskomponente 20 umfasst bei dem Ausführungsbeispiel gemäß Figur 1 zwei parallele Rahmenabschnitte 21 und 22 sowie ein dazwischen liegendes Trennteil 23, bei dem es sich beispielsweise um eine Glasscheibe handeln kann. Das Trennteil 23 ist randseitig mit den beiden Rahmenabschnitten 21 und 22 verbunden.

Bei dem Fahrzeug 10 gemäß Figur 1 bildet der Fahrzeugboden 11 ein erstes Teil einer Anordnung, bei der mit dem ersten Teil ein zweites Teil in Form der Einrichtungskomponente 20 mittels der Befestigungseinrichtung 30 verbunden ist.

Die Befestigungseinrichtung 30 umfasst ein Strangpressprofilteil 40 sowie zwei Winkelelemente 50 und 51, die vorzugsweise baugleich sind und mit dem Strangpressprofilteil 40 verbunden, insbesondere verschraubt sind. Zum Verbinden bzw. zum Verschrauben der beiden Winkelelemente 50 und 51 mit dem Strangpressprofilteil 40 dienen Fixierelemente 60, bei denen es sich vorzugsweise um Schrauben handelt.

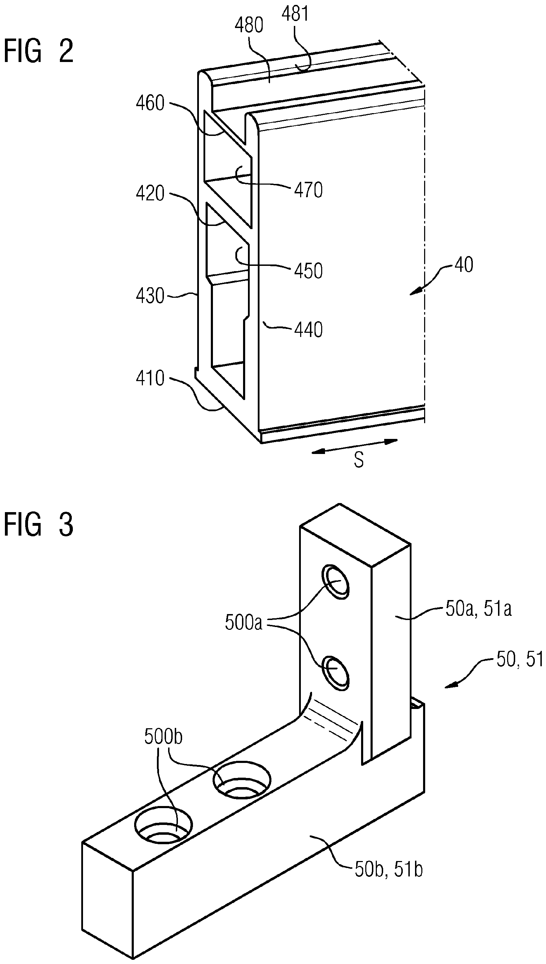

Der Profilquerschnitt des Strangpressprofilteils 40 ist näher in der Figur 2 dargestellt. Man erkennt eine Außenplatte 410, die zur Auflage auf dem Fahrzeugboden 11 gemäß Figur 1 dient. Parallel zu der Außenplatte 410 ist eine zweite Platte 420 angeordnet, die mit der Außenplatte 410 durch zwei Seitenwände 430 und 440 verbunden ist. Die beiden Seitenwände 430 und 440 sind vorzugsweise parallel zueinander angeordnet. Die beiden Seitenwände 430 und 440, die Außenplatte 410 und die zweite Platte 420 bilden einen im Querschnitt geschlossenen unteren Strangpressprofilabschnitt 450 des Strangpressprofilteils 40. Der Strangpressprofilabschnitt 450 erstreckt sich in Strangpressrichtung S rohrförmig mit einem eckigen und näherungsweise rechteckigen Querschnitt.

Wie weiter unten noch näher erläutert werden wird, dient der untere Strangpressprofilabschnitt 450 zur Aufnahme der beiden Winkelelemente 50 und 51 gemäß Figur 1.

Die Figur 2 zeigt darüber hinaus eine dritte Platte 460, die gemeinsam mit der zweiten Platte 420 sowie den beiden Seitenwänden 430 und 440 einen im Querschnitt geschlossenen, oberen Strangpressprofilabschnitt 470 des Strangpressprofilteils 40 bildet. Auch der obere Strangpressprofilabschnitt 470 erstreckt sich rohrförmig entlang der Strangpressrichtung S des Strangpressprofilteils 40.

In der Figur 2 lässt sich außerdem erkennen, dass sich die beiden Seitenwände 430 und 440 über den oberen Strangpressprofilabschnitt 470 hinauserstrecken und gemeinsam mit der dritten Platte 460 einen - im Querschnitt betrachtet - u-förmigen Abschnitt 480 bilden. Der u-förmige Abschnitt 480 bildet eine Aufnahmerille 481, in die ein Auflageabschnitt 20a der Einrichtungskomponente 20 gemäß Figur 1 zur Fixierung auf dem Strangpressprofilteil 40 eingeschoben werden kann. Bei dem Ausführungsbeispiel gemäß Figur 1 wird der Auflageabschnitt 20a der Einrichtungskomponente 20 durch einen unteren Rand des Trennteils 23 gebildet.

Die Montage der in der Figur 1 dargestellten Komponenten kann beispielsweise wie folgt erfolgen:
In einem Arbeitsschritt wird das Winkelelement 50 mit dem Strangpressprofilteil 40 verbunden. Dies erfolgt, indem ein erster Abschnitt 50a von der Stirnseite 40a in den unteren Strangpressprofilabschnitt 450 eingeschoben wird und anschließend mit der zweiten Platte 420 verbunden, insbesondere verschraubt wird. Das Verschrauben des ersten Abschnitts 50a erfolgt mittels der Fixierelemente 60. Die Fixierelemente 60 werden bevorzugt in Gewinde eingeschraubt, die zuvor in die zweite Platte 420 eingeschnitten worden sind.

Davor oder danach wird das Winkelelement 51 in entsprechender Weise an der Stirnseite 40b in den unteren Strangpressprofilabschnitt 450 eingeschoben, und es wird der erste Abschnitt 51a des Winkelelements 51 mit der zweiten Platte 420 verbunden, insbesondere verschraubt.

Davor oder danach wird der zweite Abschnitt 50b des Winkelelements 50 mit dem Rahmenabschnitt 21 verbunden, insbesondere verschraubt. Der Rahmenabschnitt 21 erstreckt sich zu diesem Zwecke an der Stirnseite 40a des Strangpressprofilteils 40 und an dem Winkelteil 50 vorbei in Richtung des Fahrzeugbodens 11. Zur Verbindung zwischen dem Rahmenabschnitt 21 und dem zweiten Abschnitt 50b des Winkelelements 50 dienen Fixierelemente 61, bei denen es sich beispielsweise um Schrauben handeln kann. Die Fixierelemente 61 werden bevorzugt in Gewinde eingeschraubt, die in dem Rahmenabschnitt 21 vorhanden sind.

In entsprechender Weise wird davor oder danach der zweite Abschnitt 51b des Winkelelements 51 mit dem Rahmenabschnitt 22 der Einrichtungskomponente 20 verbunden, insbesondere verschraubt.

Wie bereits erwähnt, wird das Trennteil 23 der Einrichtungskomponente 20 in die Aufnahmerille 481 des Strangpressprofilteils 40 eingeschoben. Zur Erhöhung der Stabilität kann es von Vorteil sein, den Auflageabschnitt 20a der Einrichtungskomponente 20 mit der Aufnahmerille 481 des Strangpressprofilteils 40 zu verkleben.

Davor oder danach wird das Strangpressprofilteil 40 mit dem Fahrzeugboden 11 des Fahrzeugs 10 verbunden, vorzugsweise verschraubt. Zur Verbindung des Strangpressprofilteils 40 sind in der Außenplatte 410 Löcher 411 vorgesehen, die entlang der Strangpressrichtung S des Strangpressprofilteils 40 beabstandet sind.

Um eine Zugänglichkeit zu den Löchern 411 zu vereinfachen oder zu gewährleisten, sind (vorzugsweise gefräste) Ausnehmungen 441 in der Seitenwand 440 vorgesehen, wie dies in der Figur 1 gezeigt ist. Zusätzlich können entsprechende Ausnehmungen auch in der Seitenwand 430 vorgesehen sein, jedoch ist dies nicht zwingend nötig.

Die Ausnehmung 441, die im Bereich der Stirnseite 40a des Strangpressprofilteils 40 vorgesehen ist, vereinfacht nicht nur eine Befestigung des Strangpressprofilteils 40 auf dem Fahrzeugboden 11, sondern darüber hinaus auch ein Verbinden des ersten Abschnitts 50a des Winkelteils 50 an der darüber befindlichen zweiten Platte 420 des Strangpressprofilteils 40. Darüber hinaus vereinfacht diese Ausnehmung 441 auch den Zugang zu den Fixierelementen 61, die zum Verbinden des zweiten Abschnitts 50b des Winkelteils 50 mit dem Rahmenabschnitt 21 dienen.

Die im Bereich der Stirnseite 40b des Strangpressprofilteils 40 vorgesehene Ausnehmung 441 vereinfacht in entsprechender Weise einen Zugang zu den Löchern 411 in diesem Abschnitt des Strangpressprofilteils 40 sowie darüber hinaus ein Verbinden des ersten Abschnitts 51a des Winkelelements 51 mit der darüber befindlichen zweiten Platte 420 des Strangpressprofilteils 40 sowie ein Verbinden des zweiten Abschnitts 51b des Winkelelements 51 mit dem Rahmenabschnitt 22 der Einrichtungskomponente 20.

Zusammengefasst wird die Einrichtungskomponente 20 auf dem Fahrzeugboden 11 des Fahrzeugs 10 mittels mehrerer Montageschritte verbunden, deren Reihenfolge beliebig ist. So kann das Strangpressprofilteil 40 auf dem Fahrzeugboden 11 montiert werden, bevor die Einrichtungskomponente 20 oder die Winkelelemente 50 und 51 montiert werden. Alternativ ist es möglich, zunächst die Einrichtungskomponente 20 mittels der Winkelelemente 50 und 51 an dem Strangpressprofilteil 40 zu befestigen, bevor das Strangpressprofilteil 40 auf dem Fahrzeugboden 11 montiert wird. Die Reihenfolge ist beliebig, da durch die beschriebene Ausgestaltung des Strangpressprofilteils 40 und die beschriebene Ausgestaltung der Winkelelemente 50 und 51 auf alle Fixierelemente 60 und 61 unabhängig von vorangegangenen Montageschritten stets zugegriffen werden kann.

Die Figur 3 zeigt die Ausgestaltung der beiden Winkelelemente 50 und 51 nochmals in einer anderen Darstellung. Man erkennt den ersten Abschnitt 50a bzw. 51a, der zur Verbindung mit der zweiten Platte 420 des Strangpressprofilteils 40 dient und hierzu mit Löchern 500a ausgestattet ist, durch die die Fixierelemente 60 gemäß Figur 1 hindurchgeführt werden können. Die Fixierelemente 60 werden vorzugsweise in Gewinde eingeschraubt, die in der zweiten Platte 420 des Strangpressprofilteils 40 vorgesehen sind.

Darüber hinaus erkennt man den zweiten Abschnitt 50b bzw. 51b, der zum Verbinden des Strangpressprofilteils 40 mit den beiden Rahmenabschnitten 21 und 22 der Einrichtungskomponente 20 dient und hierzu mit Löchern 500b ausgestattet ist, durch die die Fixierelemente 61 gemäß Figur 1 hindurchgeführt werden können.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung mit einem Fußboden, einer Einrichtungskomponente und einer Befestigungseinrichtung (30), die den Fußboden und die Einrichtungskomponente verbindet,
wobei
- die Befestigungseinrichtung (30) ein Strangpressprofilteil (40) und ein Winkelelement (50, 51) umfasst,
- das Strangpressprofilteil (40) eine Außenplatte (410) aufweist, die auf dem Fußboden aufliegt und mit diesem verbunden ist,
- das Strangpressprofilteil (40) eine zweite Platte (420) aufweist, die parallel zur Außenplatte (410) angeordnet ist und mit einem ersten Abschnitt (50a, 51a) des Winkelelements (50, 51) verbunden ist, und
- ein zweiter Abschnitt (50b, 51b) des Winkelelements (50, 51), der zu dem ersten Abschnitt (50a, 51a) winklig angeordnet ist, mit der Einrichtungskomponente verbunden ist,
- die Außenplatte (410) und die zweite Platte (420) durch zwei parallele Seitenwände (430, 440) verbunden sind, die gemeinsam mit der Außenplatte (410) und der zweiten Platte (420) einen im Querschnitt geschlossenen Strangpressprofilabschnitt (450) bilden, der sich entlang der Strangpressrichtung (S) rohrförmig erstreckt,
- das Winkelelement (50, 51) in dem geschlossenen Strangpressprofilabschnitt (450) angeordnet ist,
- zumindest eine der Seitenwände (430, 440) im Bereich des Winkelelements (50, 51) eine seitliche Ausnehmung (441) aufweist, die einen seitlichen Zugang zum Winkelelement (50, 51) ermöglicht,
- das Winkelelement (50, 51) in einem stirnseitigen Endabschnitt des geschlossenen Strangpressprofilabschnitts (450) angeordnet ist und
- der zweite Abschnitt (50b, 51b) des Winkelelements (50, 51) eine stirnseitige Anschlussschnittstelle zu der Einrichtungskomponente bildet.

2. Anordnung nach einem der voranstehenden Ansprüche, **dadurch gekennzeichnet, dass**
das Strangpressprofilteil (40) in der Außenplatte (410) eine Vielzahl an in Strangpressrichtung (S) beabstandeten Befestigungslöchern (411) aufweist, die ein Befestigen, insbesondere Anschrauben, des Strangpressprofilteils (40), auf dem Fußboden ermöglichen.

3. Anordnung nach Anspruch 2,
**dadurch gekennzeichnet, dass**
zumindest eine der Seitenwände (430, 440) für jedes der in Strangpressrichtung (S) beabstandeten Befestigungslöcher (411) eine seitliche Ausnehmung (441) aufweist, die einen seitlichen Zugang zum zugeordneten Befestigungsloch (411) ermöglicht.

4. Anordnung nach einem der voranstehenden Ansprüche, **dadurch gekennzeichnet, dass**
das Strangpressprofilteil (40) einen im Querschnitt u-förmigen Abschnitt (480) aufweist, in den ein Auflageabschnitt (20a) der Einrichtungskomponente eingeschoben ist.

5. Anordnung nach einem der voranstehenden Ansprüche, **dadurch gekennzeichnet, dass** die Einrichtungskomponente einen Rahmenabschnitt (21, 22) aufweist, der sich an der Stirnseite (40a, 40b) des Strangpressprofilteils (40) und an dem Winkelelement (50, 51) vorbei in Richtung des Fußbodens erstreckt.

6. Anordnung nach einem der voranstehenden Ansprüche, **dadurch gekennzeichnet, dass**
der u-förmige Abschnitt (480) des Strangpressprofilteils (40) durch die beiden Seitenwände (430, 440) des Strangpressprofilteils (40) und eine dritte Platte (460) gebildet ist, die parallel zur zweiten Platte (420) des Strangpressprofilteils (40) angeordnet ist und gemeinsam mit dieser und den beiden Seitenwänden (430, 440) einen im Querschnitt geschlossenen Strangpressprofilabschnitt (470) bilden, der sich entlang der Strangpressrichtung (S) rohrförmig erstreckt.

7. Anordnung nach einem der voranstehenden Ansprüche, **dadurch gekennzeichnet, dass**
- der Fußboden ein Fahrzeugfußboden (11) ist, und
- die Einrichtungskomponente (20) eine Gepäckregalkomponente, eine Trennwand, ein Raumteiler oder ein Türflügel ist.

## Claims

1. Arrangement having a floor, a furnishing component and a fastening device (30), which connects the floor and the furnishing component,
wherein
- the fastening device (30) comprises an extruded-profile part (40) and an angled element (50, 51),
- the extruded-profile part (40) has an outer plate (410), which rests on the floor and is connected thereto,
- the extruded-profile part (40) has a second plate (420), which is arranged parallel to the outer plate (410) and is connected to a first portion (50a, 51a) of the angled element (50, 51), and
- a second portion (50b, 51b) of the angled element (50, 51), said second portion being arranged at an angle to the first portion (50a, 51a), is connected to the furnishing component,
- the outer plate (410) and the second plate (420) are connected by two parallel side walls (430, 440), which together with the outer plate (410) and the second plate (420) form a cross-sectionally closed extruded-profile portion (450), which extends in tube form along the direction of extrusion (S),
- the angled element (50, 51) is arranged in the closed extruded-profile portion (450),
- in the region of the angled element (50, 51), at least one of the side walls (430, 440) has a lateral aperture (441), which allows lateral access to the angled element (50, 51),
- the angled element (50, 51) is arranged in an end-side end portion of the closed extruded-profile portion (450), and
- the second portion (50b, 51b) of the angled element (50, 51) forms an end-side connection interface in relation to the furnishing component.

2. Arrangement according to the preceding claim,
**characterized in that**,
in the outer plate (410), the extruded-profile part (40) has a multiplicity of fastening holes (411), which are spaced apart in the direction of extrusion (S) and allow the extruded-profile part (40) to be fastened on, in particular screwed to, the floor.

3. Arrangement according to Claim 2,
**characterized in that**,
for each of the fastening holes (411), which are spaced apart in the direction of extrusion (S), at least one of the side walls (430, 440) has a lateral aperture (441), which allows lateral access to the associated fastening hole (411).

4. Arrangement according to one of the preceding claims,
**characterized in that**
the extruded-profile part (40) has a cross-sectionally u-shaped portion (480), into which a bearing portion (20a) of the furnishing component is pushed.

5. Arrangement according to one of the preceding claims,
**characterized in that**
the furnishing component has a frame portion (21, 22), which extends past the end side (40a, 40b) of the extruded-profile part (40), and past the angled element (50, 51), in the direction of the floor.

6. Arrangement according to one of the preceding claims,
**characterized in that**
the u-shaped portion (480) of the extruded-profile part (40) is formed by the two side walls (430, 440) of the extruded-profile part (40) and by a third plate (460), which is arranged parallel to the second plate (420) of the extruded-profile part (40) and together with said second plate and the two side walls (430, 440) forms a cross-sectionally closed extruded-profile portion (470), which extends in tube form along the direction of extrusion (S).

7. Arrangement according to one of the preceding claims,
**characterized in that**
- the floor is a vehicle floor (11), and
- the furnishing component (20) is a luggage-rack component, a partition wall, a room divider or a door leaf.

## Revendications

1. Système ayant un plancher, un composant de dispositif et un dispositif (30) de fixation, qui relie le plancher et le composant de dispositif,
dans lequel
- le dispositif (30) de fixation comprend une pièce (40) de profilé filé à la presse et un élément (50, 51) en équerre,
- la pièce (40) de profilé filé à la presse a un plateau (410) extérieur, qui repose sur le plancher et y est relié,
- la pièce (40) de profilé filé à la presse a un deuxième plateau (420), qui est parallèle au plateau (410) extérieur et qui est relié à une première partie (50a, 51a) de l'élément (50, 51) en équerre, et
- une deuxième partie (50b, 51b) de l'élément (50, 51) en équerre, qui fait un angle avec la première partie (50a, 51a), est reliée au composant de dispositif,
- le plateau (410) extérieur et le deuxième plateau (420) sont reliés par deux parois (430, 440) latérales parallèles, qui forment, conjointement avec le plateau (410) extérieur et le deuxième plateau (420), une partie (450) de profilé filé à la presse de section transversale fermée, qui s'étend tubulairement le long de la direction (S) de filage à la presse,
- l'élément (50, 51) en équerre est disposé dans la partie (450) fermée du profilé filé à la presse,
- au moins l'une des parois (430, 440) latérales a, dans la région de l'élément (50, 51) en équerre, un évidement (441) latéral, qui rend possible un accès latéral à l'élément (50, 51) en équerre,
- l'élément (50, 51) en équerre est disposé dans une partie d'extrémité du côté frontal de la partie (450) fermée de profilé filé à la presse et
- la deuxième partie (50b, 51b) de l'élément (50, 51) en équerre forme une interface de raccordement du côté frontal avec le composant de dispositif.

2. Système suivant l'une des revendications précédentes,
**caractérisé en ce que**
la pièce (40) de profilé filé la presse a, dans le plateau (410) extérieur, une pluralité de trous (411) de fixation, qui sont à distance dans la direction (S) de filage à la presse et qui rendent possible une fixation, notamment un vissage, de la pièce (40) de profilé filé à la presse au plancher.

3. Système suivant la revendication 2,
**caractérisé en ce que**
au moins l'une des parois (430, 440) latérales a, pour chaque trou (411) de fixation, à distance dans la direction (S) de filage à la presse, un évidement (441) latéral, qui rend possible un accès latéral au trou (411) de fixation associé.

4. Système suivant l'une des revendications précédentes,
**caractérisé en ce que**
la pièce (40) de profilé filé à la presse a une partie (480) de section transversale en forme de u, dans laquelle une partie (20a) d'application du composant de dispositif est glissée.

5. Système suivant l'une des revendications précédentes,
**caractérisé en ce que**
le composant de dispositif a une partie (21, 22) de cadre, qui s'étend en direction du plancher, en passant devant le côté (40a, 40b) frontal de la pièce (40) de profilé filé à la presse et l'élément (50, 51) en équerre.

6. Système suivant l'une des revendications précédentes,
**caractérisé en ce que**
la partie (480) en forme de u de la pièce (40) de profilé filé à la presse est formée des deux parois (430, 440) latérales de la pièce (40) de profilé filé à la presse et d'un troisième plateau (460), qui est parallèle au deuxième plateau (420) de la pièce (40) de profilé filé à la presse, et forme, conjointement avec celle-ci et avec les deux parois (430, 440) latérales, une partie (470) de section transversale fermée de profilé filé à la presse, qui s'étend tubulairement suivant la direction (S) de filage à la presse.

7. Système suivant l'une des revendications précédentes,
**caractérisé en ce que**
- le plancher est un plancher (11) de véhicule, et
- le composant (20) de dispositif est un composant à rayonnage pour bagage, une cloison, un séparateur d'espace ou un vantail de porte.
